# FASCICULE DE BREVET EUROPEEN

(11) **EP 1 542 163 B1**
(45) Date de publication et mention de la délivrance du brevet: **14.09.2016**
(21) Numéro de dépôt: 04292753.3
(22) Date de dépôt: 23.11.2004
(51) Int. Cl.: G06T 5/00, H04N 7/00

(54) **Procédé de réduction de l'effet de pavage des images compressées par blocs**
Verfahren zur Reduzierung von Block-Artefakten in blockkomprimierten Bildern
Method of reducing blocking artefacts in block compressed images

(30) Priorité: 09.12.2003 FR 0314399
(43) Date de publication de la demande: 15.06.2005
(73) Titulaire: Sagemcom Broadband SAS, 92500 Rueil-Malmaison (FR)
(72) Inventeur: Samy, Roger, 925 Rueil Malmaison (FR)
(74) Mandataire: Fruchard, Guy

(56) Documents cités:
- EP-A- 0 772 365
- EP-A2- 0 801 506
- WANG D C C ET AL: "GRADIENT INVERSE WEIGHTED SMOOTING SCHEME AND THE EVALUATION OF ITSPERFORMANCE" COMPUTER GRAPHICS AND IMAGE PROCESSING, ACADEMIC PRESS. NEW YORK, US, vol. 15, no. 2, 1 février 1981 (1981-02-01), pages 167-181, XP002011463
- SHEN M-Y ET AL: "Review of postprocessing techniques for compression artifact removal" JOURNAL OF VISUAL COMMUNICATION AND IMAGE REPRESENTATION, ACADEMIC PRESS, INC, US, vol. 9, no. 1, mars 1998 (1998-03), pages 2-14, XP002187468 ISSN: 1047-3203

## Description

La présente invention concerne un procédé d'égalisation d'une image après une transmission électronique avec compression par blocs (par exemple en MPEG2, MPEG4, etc...).

### ARRIERE PLAN DE L'INVENTION

On sait que pour assurer la transmission électronique des images, celles-ci sont tout d'abord définies par une série de points auxquels sont associées des données relatives à différentes composantes permettant de définir l'image, en particulier la couleur, la luminance...

Pour assurer la transmission d'un volume important de données tout en minimisant l'encombrement des canaux de transmission, pour chacune des composantes de l'image les points sont regroupés selon des blocs qui sont compressés avant la transmission et décompressés après la transmission pour reconstituer l'image transmise. Toutefois la compression et la décompression des blocs sont effectuées par des fonctions de transformation qui font subir au signal de départ des distorsions dues à la quantification des paramètres de chaque bloc indépendamment des blocs voisins, ce qui se traduit lors de la reconstruction d'une image par un effet de pavage nuisible à la qualité visuelle des images. Cet effet de pavage est particulièrement sensible pour des images comportant des zones de couleur uniforme ou une variation de couleur ou de luminance entre les blocs fait apparaître la zone sous forme de pavés juxtaposés de forme géométrique correspondant aux blocs.

Afin de diminuer l'effet de pavage, il a été proposé de traiter les rangées de points à la limite de deux blocs adjacents en recherchant pour chaque composante définissant ces points une valeur moyenne des valeurs individuelles associées à chaque point. Un tel traitement se traduit par une égalisation de la couleur et de la luminance en bordure des blocs mais ne supprime pas les différences qui apparaissent au centre de deux blocs adjacents, de sorte que l'effet de pavage se trouve transformé en un effet d'anneau tout aussi nuisible à la qualité visuelle que l'effet de pavage, en particulier pour les zones texturées et de luminance uniforme.

Le document EU 801 506 décrit en outre un procédé comprenant les étapes de rechercher l'écart maximal entre la valeur moyenne initiale de chaque bloc périphérique et la valeur moyenne initiale du bloc central. Si cet écart maximal dépasse un seuil donné un traitement est effectué sur le bloc central. Dans de nombreux cas la correction porte donc sur un nombre de blocs insuffisant pour réaliser un lissage perceptible de façon satisfaisante.

### OBJET DE L'INVENTION

Un but de l'invention est de proposer un procédé d'égalisation d'une image visant à réaliser pour chaque composante de l'image une égalisation homogène sur l'ensemble de la surface de blocs adjacents tout en respectant les contrastes qui peuvent exister entre les blocs.

### BREVE DESCRIPTION DE L'INVENTION

En vue de la réalisation de ce but, on propose, selon l'invention, un procédé d'égalisation d'une image après une compression par blocs suivie d'une transmission électronique et d'une décompression selon les blocs, comportant les étapes de :
a) définir des groupes de blocs comprenant chacun au moins un bloc central et des blocs périphériques,
pour chacun des groupes de blocs formant l'image :
b) calculer pour chaque bloc une valeur moyenne initiale d'une composante à égaliser,
c) déterminer un écart initial entre la valeur moyenne initiale de chaque bloc périphérique et la valeur moyenne initiale du bloc central,
caractérisé en ce qu'il comporte les étapes de :
d) sélectionner les blocs périphériques présentant par rapport au bloc central un écart initial inférieur à un seuil prédéterminé,
e) calculer une valeur moyenne générale du bloc central et des blocs périphériques sélectionnés,
f) appliquer la valeur moyenne générale au bloc central et aux blocs périphériques sélectionnés en remplaçant la valeur initiale par la valeur moyenne générale.

Ainsi, l'ensemble des points des blocs périphériques sélectionnés et du bloc central sont ramenés à une même valeur moyenne pour la composante considérée, de sorte que les irrégularités de valeur de la composante considérée sont supprimées sur l'ensemble de la surface des blocs traités, tandis que le contraste existant avec les blocs non traités se trouve préservé.

Selon une version avantageuse de l'invention, une pondération est appliquée aux blocs périphériques selon une fonction inverse de l'écart initial lors du calcul de la moyenne générale. On minimise ainsi la contribution des blocs non homogènes dans le calcul de la moyenne générale de sorte que les écarts de valeur moyenne entre deux groupes de blocs adjacents sont également minimisés.

Selon encore un autre aspect avantageux de l'invention, avant d'appliquer la moyenne générale aux blocs périphériques, la valeur moyenne générale est calculée de façon réitérée en appliquant la valeur moyenne générale au seul bloc central jusqu'à ce que la valeur de la moyenne générale présente par rapport à la moyenne générale précédente un écart général inférieur à un seuil prédéterminée. On améliore ainsi encore l'estimation de la moyenne générale avant d'appliquer celle-ci aux blocs périphériques.

### BREVE DESCRIPTION DES DESSINS

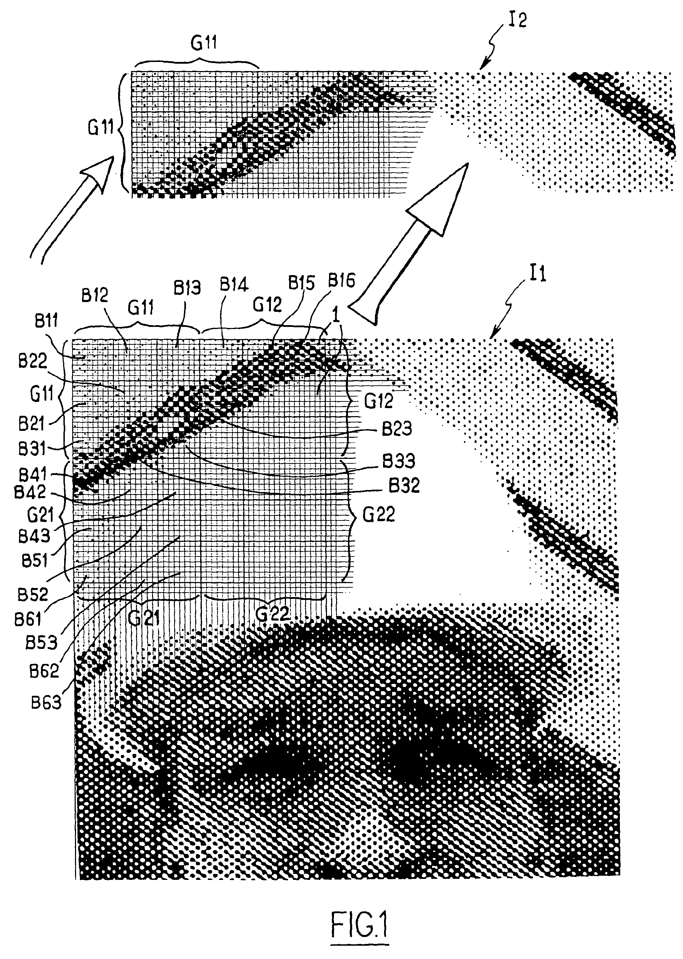

D'autres caractéristiques et avantages de l'invention apparaîtront à la lecture de la description qui suit d'un mode de mise en oeuvre préféré non limitatif du procédé selon l'invention en relation avec la figure unique ci-jointe qui illustre le procédé selon l'invention en relation avec la transmission de deux images successives représentées de façon schématique sur la figure.

### DESCRIPTION DETAILLEE DE L'INVENTION

La figure représente partiellement une première image I1 exagérément grossie et sur laquelle a été partiellement représentée une trame délimitant des points 1 définissant l'image, et plus partiellement encore une seconde image I2 décalée dans le temps par rapport à l'image I1. Avant la transmission de l'image, les points 1 sont regroupés de façon connue en soi selon des blocs portant la référence générale B et les références particulières B11, B12..., B21, B22... correspondant à la position du bloc dans l'image. Dans le mode de mise en oeuvre illustré chaque bloc comporte huit lignes et huit colonnes de points. De façon également connue en soi, les blocs B sont compressés avant d'être transmis à leur destinataire et sont décompressés après la transmission avant d'être soumis à un traitement d'égalisation destiné à réduire l'effet de pavage résultant des altérations survenues lors du traitement de compression/décompression. Ce traitement d'égalisation est effectué séparément pour chacune des différentes composantes définissant l'image.

Selon l'invention, l'égalisation est effectuée en réalisant tout d'abord un regroupement des blocs B selon des groupes de blocs portant la référence générale G et les références particulières G11, G12..., G21, G22 définissant la position particulière des groupes de blocs sur l'image. Chaque groupe de blocs comprend au moins un bloc central et des blocs périphériques entourant le bloc central. Dans l'exemple illustré, chaque groupe de blocs comprend neuf blocs B disposés selon un carré et comprenant donc un bloc central entouré de huit blocs périphériques. A titre d'exemple, le groupe de blocs G11 qui correspond au croisement de la première ligne et de la première colonne des groupes de blocs comprend un bloc central B22 entouré des blocs périphériques B11, B12, B13, B21, B23, B31, B32 et B33. La valeur individuelle de la composante à égaliser qui a été déterminée pour chaque point lors d'un balayage initial de l'image, sert à déterminer pour chaque bloc une valeur moyenne initiale de la composante à égaliser, par exemple en extrayant cette valeur moyenne initiale du coefficient correspondant à la composante continue du signal de transmission représentatif du bloc considéré. Après le calcul de la valeur moyenne initiale pour chacun des blocs B formant un groupe de blocs G, un écart initial est déterminé entre la valeur moyenne initiale de chaque bloc périphérique et la valeur moyenne initiale du bloc central. Cet écart initial est comparé à un seuil, prédéterminé de préférence par le pas de quantification des paramètres de l'image lors de la compression, pour sélectionner les blocs périphériques présentant par rapport au bloc central un écart de valeur moyenne initiale inférieur au seuil afin d'éliminer de l'égalisation les blocs présentant un contraste très important par rapport au bloc central.

Le seuil de sélection peut être défini selon un pourcentage de la valeur moyenne initiale du bloc central. Si l'on prend par exemple un seuil égal à la moitié de la valeur moyenne initiale du bloc central, dans le groupe G11 de l'exemple illustré, le bloc central B22 sert de référence et les blocs B23 et B32, qui sont très foncés, sont éliminés de l'égalisation tandis que les blocs B11, B12, B13, B21, B31 et B33 sont sélectionnés pour l'égalisation. De même dans le groupe G21 le bloc central B52 sert de référence et le bloc périphérique B41 est éliminé tandis que les autres blocs sont sélectionnés.

Une valeur moyenne générale est alors calculée à partir de la valeur moyenne initiale de chacun des blocs périphériques sélectionnés et de la valeur moyenne initiale du bloc central.

Selon un mode de mise en oeuvre préféré du procédé selon l'invention, lors du calcul de la moyenne générale, une pondération est appliquée à la valeur moyenne initiale des blocs périphériques selon une fonction inverse de l'écart initial par rapport à la valeur moyenne du bloc central. La fonction inverse est par exemple une fonction d'HUBERT ou une fonction de LORENTZ...

Toujours selon le mode de mise en oeuvre préféré de l'invention, la moyenne générale ainsi obtenue est appliquée dans un premier temps au bloc central seulement, par un remplacement de la moyenne initiale par la moyenne générale, puis un nouveau calcul de moyenne générale est effectué par réitération du procédé en commençant cette fois par une détermination de l'écart entre la valeur moyenne initiale des blocs périphériques et la moyenne générale qui vient d'être calculée pour le bloc central, puis en sélectionnant les blocs périphériques dont l'écart est inférieur au seuil, et en effectuant un nouveau calcul d'une moyenne générale. L'itération est poursuivie jusqu'à ce que la dernière moyenne générale calculée présente par rapport à la moyenne générale précédente un écart général inférieur à un seuil prédéterminé.

En pratique, en utilisant une pondération selon une fonction inverse de l'écart entre la valeur moyenne du bloc central et la valeur du bloc périphérique considéré, il suffit de procéder à un nombre d'itérations compris entre trois et cinq pour obtenir une valeur moyenne générale convergente. La mesure de la convergence de la valeur moyenne générale est de préférence effectuée en utilisant la méthode des moindres carrés.

Après détermination définitive de la valeur moyenne générale, celle-ci est appliquée au bloc central de la même façon que précédemment et à l'ensemble des blocs périphériques sélectionnés. La moyenne générale finale est alors appliquée aux points par rapport auxquels elle présente un écart positif.

Pour minimiser le temps nécessaire pour la réalisation d'une égalisation, le procédé selon l'invention est de préférence mis en oeuvre simultanément sur chacun des groupes de blocs formant l'image.

Si l'on dispose de moyens de calcul très puissants, on peut encore améliorer la qualité de l'image finale en effectuant une première égalisation à partir d'une première définition des groupes de blocs puis en décalant successivement cette définition selon une ligne et une colonne de blocs pour calculer une nouvelle moyenne générale qui est appliquée seulement au bloc central. Dans l'exemple décrit, après application de la moyenne générale aux blocs B11, B12, B13, B21, B22, B31 et B33 du groupe de blocs G11, on définit par exemple un nouveau groupe de blocs par un décalage vertical d'une ligne de sorte que le nouveau groupe de bloc comprend les blocs B21, B22, B23, B31, B32, B33, B41, B42 et B43, et la nouvelle moyenne générale est appliquée seulement au bloc central B32. Simultanément un décalage identique est effectué sur les autres groupes de blocs, puis à partir de la définition initiale un décalage horizontal d'une colonne est effectué.

Dans le mode de mise en oeuvre illustré dans lequel chaque groupe de blocs comporte trois lignes et trois colonnes de blocs, il suffit d'effectuer deux décalages verticaux et deux décalages horizontaux pour que chaque bloc soit devenu un bloc central pour un groupe de blocs, à l'exception des blocs de bordure de l'image. On notera que pour chaque décalage de groupe de blocs le calcul de la moyenne générale finale est obtenu avec un nombre réduit d'itération en raison de l'égalisation partielle déjà réalisée à partir de la définition initiale des groupes de blocs.

Lorsque des images successives proches les unes des autres sont transmises, par exemple dans le cas d'une transmission d'images vidéo, il est connu en soi d'accélérer le traitement d'égalisation des images successives en transmettant en même temps que les images successives des informations relatives au déplacement des blocs d'une image à l'image suivante. Les informations de déplacement de blocs sont utilisées pour accélérer le procédé d'égalisation selon l'invention en déterminant, par une fonction de corrélation des blocs, les déplacements de blocs entre deux images successives et en appliquant à chaque bloc d'une image une valeur d'égalisation finale du bloc correspondant de l'image précédente et en démarrant le procédé d'égalisation de la seconde image à partir de cette valeur d'égalisation comme valeur moyenne initiale pour le bloc considéré. Ceci permet d'accélérer la détermination de la moyenne générale finale pour l'image considérée, voire même d'obtenir une égalisation immédiate dans le cas où le groupe de blocs considéré est exactement identique au même groupe de blocs de l'image précédente comme cela est illustré par le groupe de blocs G11 sur l'image I2 illustrée.

Bien entendu, l'invention n'est pas limitée au mode de mise en oeuvre décrit et on peut y apporter des variantes de réalisation sans sortir du cadre de l'invention tel que défini par les revendications.

En particulier, bien que l'invention ait été décrite en relation avec des groupes de blocs comportant neuf blocs, on peut mettre en oeuvre le procédé selon l'invention en regroupant un nombre plus important de blocs, par exemple en regroupant seize blocs selon un carré comportant quatre blocs centraux qui sont alors traités comme un bloc unique, et douze blocs périphériques. Des groupes de blocs différents peuvent être pris en compte en fonction de la composante (luminance, couleur...) pour laquelle le procédé d'égalisation est mis en oeuvre.

De même, bien que l'invention ait été décrite en relation avec des blocs comprenant huit lignes et huit colonnes de points, on pourra faire varier la définition des blocs en fonction de la qualité finale que l'on souhaite obtenir.

Par ailleurs, bien que le procédé selon l'invention ait été décrit pour obtenir une égalisation optimale en prévoyant une pondération des valeurs moyennes des blocs périphériques lors du calcul de la moyenne générale, une itération du calcul de la moyenne générale et un décalage de la définition des groupes de blocs, on peut simplifier le procédé au prix d'une baisse de qualité de l'image finale en diminuant le nombre d'itérations sur le calcul de la moyenne générale, et même effectuer un calcul direct de la moyenne générale finale avec ou sans pondération de la valeur moyenne des blocs périphériques sélectionnés.

## Revendications

1. Procédé d'égalisation d'une image après une compression par blocs (B) suivie d'une transmission électronique et d'une décompression selon les blocs (B), comportant les étapes de :
a) définir des groupes de blocs (G) comprenant chacun au moins un bloc central (B22; B52) et des blocs périphériques (B11, B12... B21, B31 ; B41, B42... B51, B61),
pour chacun des groupes de blocs formant l'image:
b) calculer pour chaque bloc (B) une valeur moyenne initiale d'une composante à égaliser,
c) déterminer un écart initial entre la valeur moyenne initiale de chaque bloc périphérique et la valeur moyenne initiale du bloc central,
**caractérisé en ce qu'**il comporte les étapes de :
d) sélectionner les blocs périphériques présentant par rapport au bloc central un écart initial inférieur à un seuil prédéterminé,
e) calculer une valeur moyenne générale du bloc central et des blocs périphériques sélectionnés,
f) appliquer la valeur moyenne générale au bloc central et aux blocs périphériques sélectionnés en remplaçant la valeur initiale par la valeur moyenne générale.

2. Procédé d'égalisation selon la revendication 1, **caractérisé en ce que** la valeur moyenne initiale de la composante à égaliser est extraite d'un coefficient correspondant à une composante continue d'un signal de transmission représentatif du bloc considéré.

3. Procédé d'égalisation selon la revendication 1, **caractérisé en ce que** lors du calcul de la moyenne générale, une pondération est appliquée à la valeur moyenne initiale des blocs périphériques selon une fonction inverse de l'écart initial.

4. Procédé d'égalisation selon la revendication 1, **caractérisé en ce qu'**avant d'appliquer la valeur moyenne générale aux blocs périphériques, la valeur moyenne générale est calculée de façon réitérée en appliquant la valeur moyenne générale au seul bloc central jusqu'à ce que la valeur moyenne générale d'une itération présente par rapport à la moyenne générale d'une itération précédente, un écart général inférieur à un seuil prédéterminé.

5. Procédé d'égalisation **caractérisé en ce qu'**après mise en oeuvre du procédé selon la revendication 1, les étapes a) à e) sont réitérées avec un décalage des groupes de blocs selon un pas d'une ligne de blocs ou d'une colonne de blocs, la moyenne générale obtenue étant alors appliquée seulement au bloc central.

6. Procédé d'égalisation selon la revendication 5, **caractérisé en ce que** la valeur moyenne générale est calculée de façon réitérée jusqu'à ce que la valeur moyenne générale d'une itération présente par rapport à la moyenne générale d'une itération précédente, un écart général inférieur à un seuil prédéterminé.

7. Procédé d'égalisation selon la revendication 1 appliqué à l'égalisation de plusieurs images successives, **caractérisé en ce qu'**il comporte en outre les étapes préalables de déterminer, par une fonction de corrélation des blocs, des déplacements de blocs entre deux images et d'appliquer à chaque bloc d'une image une valeur d'égalisation finale du bloc correspondant de l'image précédente.

8. Procédé d'égalisation selon la revendication 1, **caractérisé en ce que** le seuil est prédéterminé par le pas de quantification des paramètres lors de la compression.

## Patentansprüche

1. Verfahren zur Egalisierung eines Bildes nach einer Komprimierung in Blöcken (B) gefolgt von einer elektronischen Übertragung und einer Dekomprimierung gemäß den Blöcken (B), umfassend die Schritte:
a) Definieren von Blockgruppen (G), die jeweils mindestens einen zentralen Block (B22; B52) und periphere Blöcke (B11, B12... B21, B31; B41, B42... B51, B61) umfassen,
für jede der das Bild bildenden Blockgruppen:
b) Berechnen eines Anfangsmittelwertes einer zu egalisierenden Komponente für jeden Block (B),
c) Bestimmen einer Anfangsabweichung zwischen dem Anfangsmittelwert jedes peripheren Blocks und dem Anfangsmittelwert des zentralen Blocks,
**dadurch gekennzeichnet, dass** es die Schritte umfasst:
d) Auswählen der peripheren Blöcke, die in Bezug auf den zentralen Block eine Anfangsabweichung aufweisen, die kleiner als ein vorgegebener Schwellwert ist,
e) Berechnen eines allgemeinen Mittelwertes des zentralen Blocks und der ausgewählten peripheren Blöcke,
f) Anwenden des allgemeinen Mittelwertes am zentralen Block und an den ausgewählten peripheren Blöcken, indem der Anfangswert durch den allgemeinen Mittelwert ersetzt wird.

2. Verfahren zur Egalisierung nach Anspruch 1, **dadurch gekennzeichnet, dass** der Anfangsmittelwert der zu egalisierenden Komponente aus einem Koeffizienten gewonnen wird, der einer kontinuierlichen Komponente eines für den betreffenden Block repräsentative Übertragungssignals entspricht.

3. Verfahren zur Egalisierung nach Anspruch 1, **dadurch gekennzeichnet, dass** bei der Berechnung des allgemeinen Mittelwertes eine Gewichtung des Anfangsmittelwertes der peripheren Blöcke gemäß einer Umkehrfunktion der Anfangsabweichung vorgenommen wird.

4. Verfahren zur Egalisierung nach Anspruch 1, **dadurch gekennzeichnet, dass** vor dem Anwenden des allgemeinen Mittelwertes an den peripheren Blöcken der allgemeine Mittelwert wiederholt berechnet wird, indem der allgemeinen Mittelwert an dem einzigen zentralen Block angewandt wird, bis der allgemeine Mittelwert einer Iteration in Bezug auf den allgemeinen Mittelwert einer vorhergehenden Iteration eine allgemeine Abweichung aufweist, die kleiner als ein vorgegebener Schwellwert ist.

5. Verfahren zur Egalisierung, **dadurch gekennzeichnet, dass** nach dem Durchführen des Verfahrens nach Anspruch 1 die Schritte a) bis e) mit einem Versatz der Blockgruppen gemäß einem Schritt einer Blockzeile oder eine Blockspalte wiederholt werden, wobei der erhaltene allgemeine Mittelwert dann nur an dem zentralen Block angewandt wird.

6. Verfahren zur Egalisierung nach Anspruch 5, **dadurch gekennzeichnet, dass** der allgemeine Mittelwert wiederholt berechnet wird, bis der allgemeine Mittelwert einer Iteration in Bezug auf den allgemeinen Mittelwert einer vorhergehenden Iteration eine allgemeine Abweichung aufweist, die kleiner als ein vorgegebener Schwellwert ist.

7. Verfahren zur Egalisierung nach Anspruch 1, angewandt bei der Egalisierung mehrerer aufeinanderfolgender Bilder, **dadurch gekennzeichnet, dass** es ferner die vorhergehenden Schritte des Bestimmens mittels einer Korrelationsfunktion der Blöcke von Verschiebungen von Blöcken zwischen zwei Bildern sowie des Anwendens an jedem Block des Bildes eines endgültigen Egalisierungswertes des Blockes, der dem vorhergehenden Bild entspricht, umfasst.

8. Verfahren zur Egalisierung nach Anspruch 1, **dadurch gekennzeichnet, dass** der Schwellwert von dem Quantisierungsschritt der Parameter während der Komprimierung vorgegeben wird.

## Claims

1. An equalization method for equalizing an image after compression by blocks (B) followed by electronic transmission and decompression by the blocks (B), the method comprising the steps of:
a) defining groups of blocks (G), each comprising at least one central block (B22; B52) and peripheral blocks (B11, B12, ..., B21, B31; B41, B42, ..., B51, B61), for each of the groups of blocks forming the image;
b) for each block (B) calculating an initial mean value of a component for equalizing; and
c) determining an initial difference between the initial mean value of each peripheral block and the initial mean value of the central block;
the method being **characterized in that** it comprises the steps of:
d) selecting the peripheral blocks that present, relative to the central block, an initial difference that is less than a predetermined threshold;
e) calculating a general mean value for the central block and the selected peripheral blocks; and
f) applying the general mean value to the central block and to the selected peripheral blocks, replacing the initial value with the general mean value.

2. An equalization method according to claim 1, **characterized in that** the initial mean value of the component for equalizing is extracted from a coefficient corresponding to a DC component of a transmission signal representative of the block under consideration.

3. An equalization method according to claim 1, **characterized in that** while calculating the general mean, weighting is applied to the initial mean value of the peripheral blocks using an inverse function of the initial difference.

4. An equalization method according to claim 1, **characterized in that** before applying the general mean value to the peripheral blocks, the general mean value is calculated in re-iterated manner while applying the general mean value to the central block only until the general mean value of an iteration presents, relative to the general mean value of a preceding iteration, a general difference that is less than a predetermined threshold.

5. An equalization method, **characterized in that** after performing the method according to claim 1, steps a) to e) are re-iterated with the groups of blocks offset by a pitch of one line of blocks or of one column of blocks, the resulting general mean then being applied only to the central block.

6. An equalization method according to claim 5, **characterized in that** the general mean value is calculated in re-iterated manner until the general mean value of an iteration presents, relative to the general mean value of a preceding iteration, a general difference that is less than a predetermined threshold.

7. An equalization method according to claim 1, applied to equalizing a plurality of successive images, **characterized in that** it further includes prior steps of using a block correlation function to determine movements of blocks between two images and of applying to each block of an image a final equalization value of the corresponding block of the preceding image.

8. An equalization method according to claim 1, **characterized in that** the threshold is predetermined by the quantizing pitch for the parameters during compression.
